# EUROPÄISCHE PATENTSCHRIFT

(11) **EP 0 308 801 B1**
(45) Veröffentlichungstag und Bekanntmachung des Hinweises auf die Patenterteilung: **14.12.1994**
(21) Anmeldenummer: 88115057.7
(22) Anmeldetag: 15.09.1988
(51) Int. Cl.: C08J 5/18, C08L 33/16, B05D 1/20

(54) **Film aus mindestens einer monomolekularen Schicht**
Film consisting of at least one monomolecular layer
Pellicule composée au moins d'une couche monomoléculaire

(30) Priorität: 19.09.1987 DE 3731606
(43) Veröffentlichungstag der Anmeldung: 29.03.1989
(73) Patentinhaber: HOECHST AKTIENGESELLSCHAFT, 65926 Frankfurt am Main (DE)
(72) Erfinder: Erdelen, Christian, D-6200 Wiesbaden (DE); Ringsdorf, Helmut, Prof. Dr., D-6500 Mainz (DE); Prass, Werner, Dr., D-6500 Mainz (DE); Scheunemann, Ude, Dr., D-6230 Frankfurt am Main 80 (DE)

(56) Entgegenhaltungen:
- EP-A- 0 003 071
- FR-A- 2 584 083

## Beschreibung

Die Erfindung bezieht sich auf einen Film auf mindestens einer monomolekularen Schicht aus organischen Polymeren mit langkettigen fluorhaltigen Seitenketten auf einem festen Schichtträger sowie Schichtelemente aus diesen Verbindungen.

Zur Herstellung von geordneten Schichten organischer Polymerer mit langkettigen Seitengruppen wird neben der Physisorption an festen Trägern überwiegend das Langmuir-Blodgett (LB)-Verfahren benutzt. Bei diesem Verfahren werden Moleküle auf einer Wasseroberfläche gespreitet, durch Verkleinerung der Fläche pro Molekül parallel angeordnet und bei konstantem Schub durch Ein- und Austauchen auf ein Substrat aufgezogen. Pro Tauchgang wird dabei eine monomolekulare Schicht unter Erhalt ihrer Ordnung übertragen.

Für den Aufbau von LB-Schichten verwendet man amphiphile Moleküle, d.h. Moleküle, die ein hydrophiles Ende (einen "Kopf") und ein hydrophobes Ende (einen "Schwanz") haben. Es gibt monomere amphiphile Moleküle, bei denen als hydrophobe Einheiten perfluorierte Alkylketten dienen.

Aus FR-A- 2 584 083 ist ein Verfahren zur Herstellung eines Films bekannt, der aus mehreren Schichten einer organischen amphiphilen Verbindung besteht. Die amphiphile Verbindung besteht aus einer hydrophoben Fluoralkylseitenkette mit maximal 30 Kohlenstoff-Atomen und einer hydrophilen Gruppe.

Um eine höhere Stabilität der LB-Filme zu erreichen, wurden auch schon polymere LB-Filme hergestellt. Dabei wurden sowohl monomere Amphiphile, die nach dem Aufziehen polymerisiert werden können, als auch organische Polymere mit langen Alkylseitenketten zur Schichtherstellung eingesetzt. So werden gemäß EP-A-3071 geordnete Monomerschichten aus ungesättigten Fluoralkyl-monocarbonsäuren übertragen und dann mittels UV-Strahlung auf der Substratoberfläche polymerisiert. Bei beiden Arten von polymeren LB-Filmen ist die erreichbare Ordnung in der Schicht jedoch geringer als bei monomeren Filmen, da bei der Polymerisation in der Schicht in fast allen Fällen eine Kontraktion der Amphiphilen auftritt (die zur Bildung von Fehlstellen führt) und die Polymeren sich wegen der hohen Viskosität der Monoschicht nicht so gut auf einen Träger übertragen lassen, wie monomere Amphiphile.

Es wurde nun gefunden, daß Filme aus organischen Polymeren, die fluorierte Alkylketten als Seitengruppen tragen, eine hohe innere Ordnung besitzten. Die Filme lassen sich z.B. mit Hilfe der Langmuir-Blodgett Technik herstellen. Nach der Herstellung kann man die Ordnung der Moleküle in den Schichten noch nachträglich durch Erhitzen über den Phasenübergang des Films und Wiederabkühlen verbessern.

Es wurde nun ein Film gefunden, der aus mindestens einer geordneten monomolekularen Schicht einer amphiphilen Verbindung besteht, wobei die Schicht ein organisches Polymeres mit langkettigen Fluoralkylseitengruppen enthält oder aus diesem besteht. Der Film ist dadurch gekennzeichnet, daß das Polymere durch radikalische Polymerisation von mindestens einem Monomeren der Formel I

CF₃(CF₂)ₙ(CH₂)ₘ-X-R¹ (I)

erhältlich ist, worin
n = 5 bis 11 und
m = 0 bis 24 ist,
X für 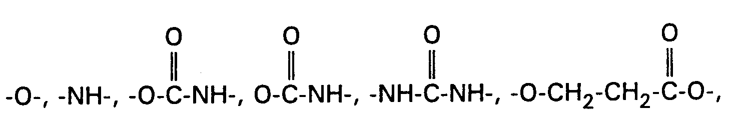 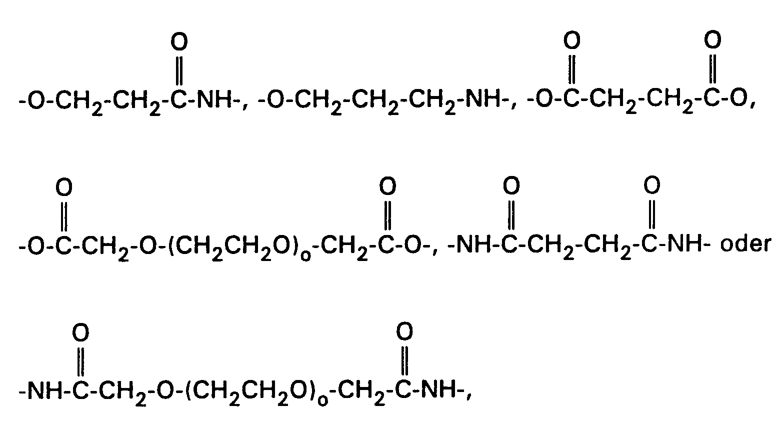
R¹ für 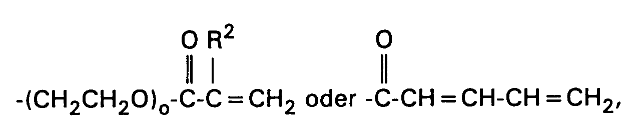
R² für -H, -CH₃, -CN, -Cl oder F und o für eine Zahl von 0 bis 10 steht, und die Seitenketten des Polymeren gleichsinnig, parallel nebeneinander und im wesentlichen senkrecht zur Schichtebene orientiert sind. Vorzugsweise bedeutet m eine Zahl von null bis 8. Es ist bevorzugt, wenn (n + m) mindestens 6 beträgt.

Die Polymeren sind amphiphil und enthalten als polare Gruppen ("hydrophile Schwänze") vorzugsweise 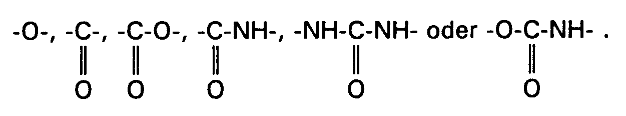
Neben dem Homopolymer können auch Copolymere eingesetzt werden, die aus mindestens einem Monomer der allgemeinen Formel I und mindestens einem Monomer der allgemeinen Formel II 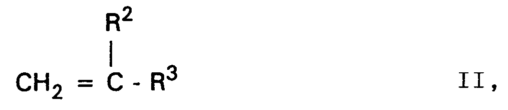
worin R² die obengenannte Bedeutung hat und R³ 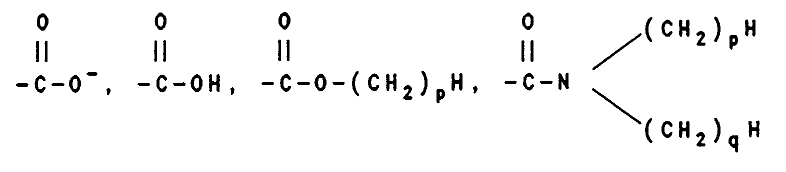
oder 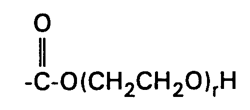
ist, durch radikale Polymerisation erhältlich sind. p und q sind Zahlen von null bis 24 und r ist eine Zahl von 1 bis 10.

Vorzugsweise enthält das organische Copolymer mit langkettigen Fluoralkylseitengruppen Monomereinheiten von Acrylsäure oder Acrylsäure-Derivaten, z.B. Methacrylsäure oder Methacrylsäure-Derivaten. Vorzugsweise ist das Copolymere wasserlöslich.

Weiterhin kann im erfindungsgemäßen Film die geordnete monomolekulare Schicht das organische Polymere mit langkettigen Fluoralkylseitengruppen im Gemisch mit einer amphiphilen Substanz enthalten, die kein organisches Polymer mit langkettigen Fluoralkylseitenketten ist und ausgewählt ist aus der Gruppe bestehend aus langkettigen Fettsäure, langkettigem Alkohol, langkettigem Amid und Verbindungen der Formel III 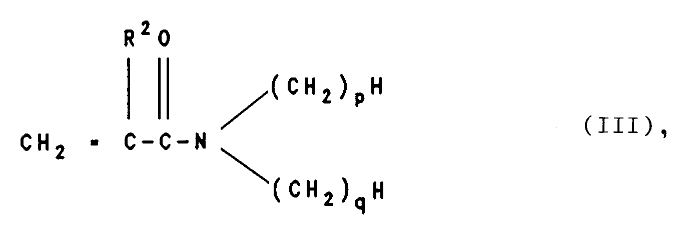
wobei R² für -H, -CH₃, -CN, -Cl oder F steht und p und q Zahlen von 0 bis 24 sind.

Ferner kann der erfindungsgemäße Film aus mindestens zwei monomolekularen Schichten unterschiedlicher Zusammensetzung bestehen, wobei jeweils eine Schicht, welche ein organisches Polymeres mit langkettigen Fluoralkylseitengruppen enthält oder aus dieser besteht, abwechselt mit einer Schicht, welche eine andere amphiphile Verbindung enthält oder aus dieser besteht.

In diesen Gemischen beträgt der Anteil der Polymeren mit Fluoralkylseitengruppen vorzugsweise mindestens 10 Gew.-%, insbesondere mindestens 20 Gew.-%. Neben den anderen amphiphilen Substanzen können z.B. noch Lösungsmittel oder Verunreinigungen im Gemisch enthalten sein.

Zur Herstellung der erfindungsgemäßen Filme werden die organischen Polymeren in einem hochflüchtigen Lösungsmittel gelöst und auf die Wasseroberfläche in einer Langmuir-Blodgett Filmwaage gebracht (gespreitet). Aus der Abmessung der Oberfläche, dem Spreitvolumen und der Konzentration der Lösung wird die mittlere Fläche pro Repetiereinheit berechnet. Phasenübergänge bei der Kompression der Moleküle lassen sich in der Schub-Flächen-Isotherme verfolgen.

Die Moleküle werden mit einer Barriere zusammengeschoben, wobei die Ketten bei wachsender Dichte im wesentlichen senkrecht zur Grenzschicht orientiert werden. Während der Kompression entsteht durch Selbstorganisation der Moleküle an der Grenzschicht ein hochgeordneter, monomolekularer Film, dessen konstante Schichtdicke durch die Kettenlänge der Moleküle und deren Tiltwinkel (das ist der Winkel, um den die Molekülketten auf der Wasseroberfläche gegen die Normale gekippt sind) bestimmt. Die typische Dicke eines solchen Films liegt bei 2 bis 3 nm.

Der auf der Wasseroberfläche erzeugte Film aus einem organischen Polymer mit langkettigem Fluoralkylseitengruppen wird bei konstantem Schub durch Eintauchen oder Austauchen eines geeigneten Trägers unter Erhalt der Ordnung auf den Träger übertragen. Die Ordnung in der Schicht kann dadurch verbessert werden, daß man den Film auf eine Temperatur aufheizt, bei der die Röntgenbeugungslinien verschwinden (Phasenübergang in die isotrope Phase, Aufschmelzen der Seitenketten) und man anschließend wieder abkühlt. Ebenso kann man auch den Film einige Zeit (z.B. mehrere Stunden) auf eine Temperatur knapp unterhalb (z.B. 0,5-5°C) eines durch Röntgenbeugung beobachtbaren Phasenübergangs in ein flüssig-kristallines System oder von einem flüssigkristallinen System in ein isotropes System aufheizen und solange bei dieser Temperatur halten bis eine durch Verschärfung der Röntgenbeugungslinien sichbare Erhöhung der Ordnung eingetreten ist und dann anschließend wieder abkühlen.

Als Träger kommen beliebige feste, vorzugsweise dimensionsstabile Substrate aus unterschiedlichen Materialien in Betracht. Die als Schichtträger dienenden Substrate können beispielsweise transparent oder lichtduchlässig, elektrisch leitend oder isolierend sein. Das Substrat kann hydrophob oder hydrophil sein. Die Oberfläche des Substrats, auf die die LB-Schicht aufgebracht wird, kann hydrophobiert sein. Die zu beschichtende Oberfläche des Substrats sollte möglichst rein sei, damit die Ausbildung einer dünnen, geordneten Schicht nicht gestört wird. Insbesondere die Anwesenheit von oberflächenaktiven Stoffen auf der zu beschichtenden Oberfläche der Substrate kann die Schichtherstellung beeinträchtigen. Es ist möglich, die als Schichtträger dienenden Substrate auf der zu beschichtenden Oberfläche vor dem Aufbringen der LB-Filme zunächst mit einer Zwischenschicht zu verstehen, um z.B. die Haftung des Filmes auf dem Substrat zu verbessern.

Als Materialien für die Substrate können beispielsweise Metalle, wie etwa Gold, Platin, Nickel, Palladium, Aluminium, Chrom, Niob, Tantal, Titan, Stahl und dergleichen verwendet werden. Andere geeignete Materialien für die Substrate sind Kunststoffe, wie beispielsweise Polyester, etwa Polyethylenterephthalat oder Polybutylenterephthalat, Polyvinylchlorid, Polyvinylidenchlorid, Polytetrafluorethylen, Polyethylen oder Polypropylen.

Gleichermaßen kommen auch Halbleiter, wie Silizium oder Germanium, Glas, Siliziumdioxid, keramische Werkstoffe oder Celluloseprodukte für die Substrate in Betracht. Die Oberfläche von Glas und anderen hydrophilen Substraten kann, sofern erforderlich, in an sich bekannter Weise, beispielsweise durch Umsetzung mit Alkylsilanen oder Hexamethyldisilazan, hydrophobiert werden. Die Auswahl der Substratmaterialien richtet sich in erster Linie nach dem Verwendungszweck der aus den erfindungsgemäßen Filmen hergestellten Schichtelemente. Für optische Elemente werden in der Regel transparente, lichtdurchlässige Substrate als Schichtträger eingesetzt. Werden die erfindungsgemäßen Schichtelemente beispielsweise in der Elektrotechnik oder bei elektrochemischen Prozessen verwendet, dienen als Substrate insbesondere elektrisch leitfähige Materialien, wie Metalle oder metallische Oberflächenschichten, beispielsweise auf Kunststoffolien.

Die als Träger für die erfindungsgemäßen Filme dienenden Substrate können, je nach Verwendungszweck, beliebige Formen aufweisen. Beispielsweise können sie film-, folien-, platten-, bandförmig oder auch zylinderförmig sein oder unter anderen beliebigen Formen ausgewählt werden. Im allgemeinen wird es sich bei den Schichtträgern um flache, ebene Substrate handelt, wie z.B. Filme, Folien, Platten, Bänder und dergleichen. Die zu beschichtende Oberfläche der Substrate ist vorzugsweise glatt, wie es für die Herstelllung von LB-Filmen üblich ist. Bei flachen, ebenen Substraten können die erfindungsgemäßen Filme auf eine oder beide Oberflächen des Substrats aufgebracht werden.

Der erfindungsgemäße Film zeichnet sich durch eine stabile und gleichzeitig hochgeordnete Multischichtstruktur mit wenigen Defektstellen aus.

Solche Filme auf Substraten eignen sich beispielsweise in optischen Wellenleitersystemen oder zur Herstellung von Filtern für optische Zwecke. Aufgrund der geringen kritischen Oberflächenspannung sind die Filme auch zur Verbesserung der Reibungseigenschaften von Materalien, zur Herstellung von Schutzschichten sowie für weitere einschlägige Anwendungen geeignet.

Die Erfindung wird durch die nachfolgenden Beispiele näher erläutert.

### Beispiel 1

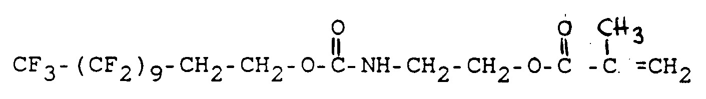

Zu einer Lösung von 2 g (3,55 mmol), 1H,1H,2H,2H-Perfluordodekanol und einer Spatelspitze 2,6 Di-tert. Butyl-p-kresol als Inhibitor in absolutem Dichlormethan wurden unter trockenem Stickstoff ca. 0,7 cm³ (690 mg, 4,4 mmol) frisch destilliertes Isocyanatoethylmethacrylat-2 und anschließend noch 2 Tropfen Triethylamin als basischer Katalysator gegeben. Nach 10-stündigem Kochen unter Rückfluß, Abziehen des Lösemittels im Rotationsverdampfer und zweimaligem Umkristallisieren aus einer 1 : 2 Mischung (v/v) von Dichlormethan und Petrolether erhielt man 2,2 g = 85 % der theoretischen Ausbeute an reinem N-(Methylacryloxyethyl)-carbaminsäure-1,1H,2H,2H-perfluordodecylester. Der Schmelzpunkt der reinen Verbindung betrug 71°C. Die Elementaranalyse ergab: C: 32,5 % (ber.: 31,7 %), H: 1,8 % (ber.: 2,0%), F: 56,0 % (ber.: 55,5 %), N: 1,7 % (ber.: 1,9 %).

### Beispiel 2

### Hompopolymerisation von 1H,1H,2H,2H-Perfluordecylmethacrylat

750 mg des Monomeren 1H,1H,2H,2H-Perfluordecylmethacrylat wurden in 7,5 cm³ Trifluortoluol gelöst, 12,4 mg (5 mol %) tert.-Butylperoxyisopropylcarbonat (TBPIC) dazugegeben, die Reaktionslösung 10 min mit Argon gespült und anschließend viermal unter Vakuum entgast. Dann wurde die Mischung 18 Stunden auf 90°C erhitzt. Das Produkt wurde anchließend durch Eingießen in 200 cm³ Dichlormethan gefällt, das Fällungsmittel abdekantiert und das Polymere abzentrifugiert und im Vakuum getrocknet (Ausbeute: 234 mg; 31 % d.Th.). Die Elementaranalyse ergab: C: 31,5 % (ber.: 31,6 %), H, 1,7 %, (ber.: 1,7 %), F: 61,2 % (ber.: 60,7 %)

### Beispiel 3

### Homopolymerisation von N-(Methacryloxyethyl)-carbaminsäure-1H,1H,2H,2H-Perfluordodecylester

300 mg des in Beispiel 1 hergestellten Monomeren wurden in 7 cm³ Dioxan gelöst, 3,97 mg (5 mol%) Azo-bis-isobutyronitril (AIBN) dazugegeben, die Reaktionslösung 10 min mit Argon gespült und anschließend viermal unter Vakuum entgast. Dann wurde die Mischung für 18 Stunden auf 60°C erhitzt. Das Produkt wurde anschließend durch Eingießen in 200 cm³ Petrolether gefällt, das Fällungsmittel abdekantiert und das Polymere abzentrifugiert und im Vakuum getrocknet (Ausbeute: 184 mg; 61 % d. Th.). Die Elementaranalyse ergab: C: 33,2 % (ber.: 33,0 %), H: 2,6 % (ber.: 2,3 %), F: 46,1 % (ber.: 52,2 %), N: 2,2 % (ber.: 2,3 %).

### Beispiel 4

### Copolymerisation von 1H,1H,2H,2H-Perfluorodecylmethacrylat mit 2-Hydroxyethylmethacrylat

120 mg des Monomeren 1H,1H,2H,2H-Perfluorodecylmethacrylat und 130,9 mg des Comonomeren 2-Hydroxyethylacrylat wurden in 5 cm³ Dioxan gelöst, 5,55 mg (2,5 mol%) Azo-Bis-isobutyronitril (AIBN) dazugegeben, die Reaktionslösung 10 min mit Argon gespült und anschließend viermal unter Vakuum entgast. Dann wurde die Mischung für 10 Stunden auf 60°C erhitzt. Das Produkt wurde anschließend durch Eingießen in 200 cm³ Petrolether gefällt, das Fällungsmittel abedekantiert und das Polymere abzentrifugiert und im Vakuum getrocknet (Ausbeute: 212 mg; 84 % d.Th.). Die Elementaranalyse ergab: C: 40,9 % (ber. 42,1 %), H: 4,5 % (ber.: 4,4 %), F: 30,1 % (ber.: 29,0 %). Die berechneten Werte beziehen sich auf eine Copolymerzusammensetzung, die der Zusammensetzung der Ausgangsmonomermischung entspricht.

### Beispiel 5

### Herstellung und röntgenographische Charaktierisierung von LB-Filmen aus Poly-(1H,1H,2H,2H-Perfluordecyl)-methacrylat

Ein rechteckiges Stück einer Polyesterfolie (160x26 mm) wurde auf einen rechteckigen PTFE-Träger (76x26x3 mm) gespannt und der Träger mit der Folie durch Abspülen, zuerst mit Diethylether und anschließend mit deisonisiertem Wasser gereinigt.

Schichten des in Beispiel 2 hergestellten Polymeren wurden nach dem Verfahren von Langmuir und Blodgett auf die Folie übertragen, indem in einer Langmuir-Filmwaage 0,25 cm³ einer Lösung von 5 mg des Polymeren in 10 cm³ Trichlortrifluormethan auf einer wäßrigen Subphase bei einer Subphasentemperatur von 30°C gespreitet wurden. Durch Verkleinerung der monofilmbedeckten Wasseroberfläche wurde der Schub auf 20 mM/m eingeregelt und bei diesem Wert konstant gehalten. Der Träger wurde nun senkrecht von oben durch die Wasseroberfläche in die Filmwaage eingetaucht (Eintauchgeschwindigkeit: 0,3 mm/sec) und nach einer kurzen Pause (10 Sekunden) am unteren Umkehrpunkt wieder herausgenommen (Austauchgeschwindigkeit: 0,2 mm/sec). Sowohl beim Ein- als auch beim Austauchvorgang wurde eine Monolage auf den Träger übertragen. Durch mehrfache Wiederholung des Tauchvorgangs nach jeweils 9 Minuten Wartezeit am oberen Umkehrpunkt wurden auf den Träger 17 Doppelschichten übertragen.

Zur Bestimmung der Schichtabstände in der Multischicht wurde der Film in einem Pulverdiffraktometer (D 500 der Fa. Siemens) unter Verwendung von Nickel-gefilterter Cu-Kα-Strahlung (λ= 0,1541 nm) röntgenographisch untersucht. Aus dem Streupeak bei 2 Theta= 3,05° ergab sich ein Schichtabstand von 2,9 nm.

Um die Temperaturbeständigkeit der Multischicht zu ermitteln, wurden die Röntgenmessungen bei verschiedenen Temperaturen durchgeführt. Der Streupeak bei 2 Theta= 3,05° war recht wenig ausgeprägt. Durch Erhöhung der Temperatur auf 50 und 70°C änderte sich nichts, kühlte man wieder auf Zimmertemperatur ab, wurde die Ordnung im Film erhöht, was sich durch eine leichte Intensitätszunahme des Streureflexes bemerkbar machte. Durch erneutes Aufheizen der Probe auf 100 bis 130°C wurde die Multischicht aufgeschmolzen und zeigte keine Schichtordnung mehr; beim Abkühlen auf Zimmertemperatur ordnete sich das Polymere aber wieder in Schichten. Die nun entstandene Ordnung war allerdings weit größer als bei den ursprünglichen Proben. Neben dem jetzt wesentlich intensiveren Schichtreflex erster Ordnung war auch ein Reflex zweiter Ordnung meßbar. Der ursprüngliche Schichtreflex war allerdings leicht verschoben und trat nun bei 2 Theta= 3,15° auf (entsprechend einem Doppelschichtabstand von 2,8 nm).

### Vergleichsbeispiel A

### Herstellung und röntgenographische Charakterisierung von LB-Filmen aus Polyoctadecylmethacrylat

Ein rechteckiges Stück einer Polyesterfolie wurde wie in Beispiel 5 gereinigt und wie in Beispiel 5 wurden nach dem Verfahren von Langmuir und Blodgett Schichten von Polyoctadecylmethacrylat übertragen (Subphase: Wasser von 30°C, Schub: 18 mN/m, Ein- und Austauschgeschwindigkeit: 0,3 mm/sec, Pause am oberen Umkehrpunkt: 6 min). Bei dieser Verbindung wurde jeweils nur beim Austauchen des Trägers eine Monolage übertragen. Insgesamt wurden 23 Schichten auf die Folie aufgebracht.

Die Schichtabstände wurden wie in Beispiel 5 röntgenographisch bestimmt. Der Schichtreflex lag bei 2 Theta= 2,8°, entsprechend einem Schichtabstand von 3,1 nm. Bei Erwärmen des Trägers auf 50°C schmolz die Multischicht auf und der Streupeak verschwand. Eine Neuordnung der Schicht beim Abkühlen, wie er bei dem fluorierten Polymeren festzustellen war, trat hier nicht ein.

### Beispiel 6

### Herstellung und röntgenographische Charakterisierung von LB-Filmen aus einem Copolymeren aus 1H,1H,2H,2H-perfluorodecylmethacrylat und 2-Hydroxyethylacrylat

Ein rechteckiges Stück einer Polyesterfolie wurde wie in Beispiel 5 gereinigt und wie in Beispiel 5 wurden nach dem Verfahren von Langmuir und Blodgett Schichten von dem in Beispiel 4 hergestellten Copolymeren übertragen (Subphase: Wasser von 30°C, Schub 50 mN/m, Ein- und Austauchgeschwindigkeit 0,3 mm/sec, Pause am oberen Umkehrpunkt: 6 min). Es wurde jeweils sowohl beim Ein- als auch beim Austauchen des Trägers eine Monolage übertragen. Insgesamt wurden 15 Doppelschichten auf die Folie aufgebracht.

Die Schichtabstände wurden wie in Beispiel 5 röntgenographisch bestimmt. Der im Vergleich zum Homopolymer in Beispiel 5 sehr scharfe Schichtreflex lag bei 2 Theta= 2,05°, entsprechend einem Schichtabstand von 4,3 nm. Zu diesem Reflex waren auch zweite und dritte Ordnungen zu erkennen. Beim Erwärmen des Trägers auf 40°C nahm die Intensität des Reflexes noch zu. Fortgesetztes Erwärmen ließ dagegen seine Intensität absinken, d.h. die Ordnung in der Multischicht nahm ab. Weiteres Aufheizen auf 120°C ließ den Streupeak schließlich ganz verschwinden. Wurde die Probe abgekühlt, trat der Streupeak an derselben Stelle wieder auf. Dieses Verhalten entspricht dem des Homopolymeren in Beispiel 5.

### Vergleichsbeispiel B

### Herstellung und röntgenographische Charakterisierung von LB-Filmen aus einem Copolymeren aus Octadecylmethacrylat und 2-Hydroxyethylmethacrylat

Ein rechteckiges Stück einer Polyesterfolie wurde wie in Beispiel 5 gereinigt und wie in Beispiel 5 wurden nach dem Verfahren von Langmuir und Blodgett Schichten von einem Copolymeren aus Octadecylmethacrylat und 2-Hydroxyethylmethacrylat (Monomerenverhältnis: 1:5) übertragen (Subphase: Wasser von 20°C, Schub: 30 mN/m, Eintauchgeschwindigkeit: 0,8 mm/sec, Austauchgeschwindigkeit: 0,3 mm/sec, Pause am oberen Umkehrpunkt: 9 min). Es wurde jeweils sowohl beim Ein- als auch beim Austauchen des Trägers eine Monolage übertragen. Insgesamt wurden 19 Doppelschichten auf die Folie aufgebracht.

Die Schichtabstände wurden wie in Beispiel 6 röntgenographisch bestimmt. Der auch hier im Vergleich zum Homopolymer in Beispiel 6 sehr scharfe Schichtreflex lag bei 2 Theta= 1,55°, entsprechend einem Schichtabstand von 5,7 nm. Beim Aufheizen fiel auf, daß die Multischicht bis 100°C wenig temperaturempfindlich war. Sobald aber bei ca. 150°C die Multischicht einmal aufgeschmolzen war, trat beim Abkühlen keine Reorganisation mehr ein.

### Beispiel 7

### Kritische Oberflächenspannung von LB-Filmen aus Poly-(1H,1H,2H,2H-perfluordecyl)-methacrylat

Ein Siliziumplättchen (4 cm x 1 cm) wurde aus einem Siliziumwafer herausgeschnitten und folgendermaßen gereingt:
1. 1 Stunde Behandlung in einem Ultraschallbad in einer Mischung aus einem Teil 30 % H₂O₂ und vier Teilen konzentrierter Schwefelsäure. Anschließend mit sauberem Wasser abspülen.
2. 20 Sekunden in Ammoniumfluorid-gepufferte HF-Lösung tauchen und anschließend mit sauberem Wasser abspülen.

Nach dieser Behandlung waren die Siliziumplättchen hydrophob (Kontaktwinkel zu Wasser: 75°).

Schichten von Poly-(1H,1H,2H,2H-perfluordecyl)-methacrylat wurden wie in Beispiel 5 auf das Siliziumplättchen nach dem Verfahren von Langmuir und Blodgett übertragen (Subphase: Wasser von 30°C, Schub: 20 mN/m, Eintauchgeschwindigkeit: 1,8 cm/min, Austauchgeschwindigkeit: 1,2 cm/min, Pause am oberen Umkehrpunkt: 9 min). Es wurde jeweils sowohl beim Eintauchen als auch beim Austauchen eine Monolage übertragen. Insgesamt wurden 4 Doppelschichten übertragen.

Auf die Oberfläche der übertragenen Schichten wurden Flüssigkeitstropfen einer Reihe von n-Alkanen (C₇H₁₆-C₆H₃₄) gebracht und die Kontaktwinkel der Flüssigkeitstropfen mit der Oberfläche gemessen. Aus diesen Kontaktwinkeln wurde nach den Verfahren von Zisman die kritische Oberflächenspannung bestimmt. Das Ergebnis der Bestimmung war eine kritische Oberflächenspannung von 10,5 mN/m.

### Beispiel 8

### Ellipsometrische Messungen an LB-Filmen aus einem Copolymer aus 1H,1H,2H,2H-perfluorodecyl-methacrylat und 2-Hydroxyethylacrylat

Ein Siliziumplättchen wurde wie in Beispiel 7 gereinigt und nach dem Langmuir-Blodgett Verfahren analog zu Beispiel 6 mit 18, 24, 30, 36, 44, 50 und 60 Monolagen des in Beispiel 4 hergestellten Polymeren beschichtet.

Mittels Ellipsometermessungen wurden anschließend die Schichtdicken und der Brechungsindex der LB-Filme gemessen. (Ergebnis: Brechungsindex bei 633 nm: 1,43 ± 0,05).

### Beispiel 9

### Messung der thermischen Stabilität von LB-Filmen aus einem Copolymer aus 1H,1H,2H,2H-Perfluorodecyl-methacrylat und 2-Hydroxyethylacrylat mittels Thermodesorptions-Messungen

Ein Siliziumplättchen (4 cm x 1 cm) wurde aus einem thermisch oxidierten Siliziumwafer (Dicke der Oxidschicht: 160 nm) herausgeschnitten und eine Stunden in einem Ultraschallbad in einer Mischung aus einem Teil 30 % H₂O₂ und vier Teilen konzentrierter Schwefelsäure behandelt. Danach wurde das Plättchen in nochmals 15 Minuten in einem alkalischen Reinigungsbad bei einer Temperatur von 50°C mit Ultraschall behandelt und anschließend mit sauberem Wasser gründlich gespült und in einem warmen Luftstrom getrocknet. Danach erfolgte zur Hydropobierung eine Behandlung mit Hexamethyldisilazan-Dampf (10 Minuten bei 70°C).

Die Beschichtung nach der LB-Methode mit 8 Schichten erfolgte mit dem in Beispiel 4 hergestellten Copolymer wie in Beispiel 8 beschrieben.

Der beschichtete Träger wurde in einer speziellen Apparatur mit linearem Temperaturgradienten (0,5 °C/sec) aufgeheizt. Während des Aufheizvorgangs wurde die Dicke der LB-Schicht anhand der Intensität eines von der Probe reflektierten, senkrecht polarisierten Laserstrahls (633 nm) gemessen.

Die daraus ermittelte Desorptionstemperatur betrug 300°C.

## Patentansprüche

1. Film, bestehend aus mindestens einer geordneten monomolekularen Schicht einer amphiphilen Verbindung, wobei die Schicht ein organisches Polymeres mit langkettigen Fluoralkylseitengruppen enthält oder aus diesen besteht, dadurch gekennzeichnet, daß das Polymere durch radikalische Polymerisation von mindestens einem Monomeren der Formel I
CF₃(CF₂)ₙ(CH₂)ₘ-X-R¹ (I)
erhältlich ist, worin
n = 5 bis 11 und
m = 0 bis 24, ist
X für 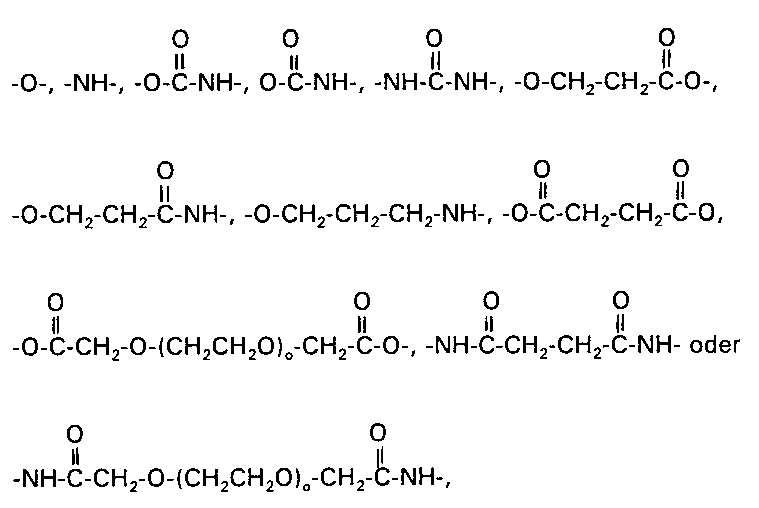 R¹ für 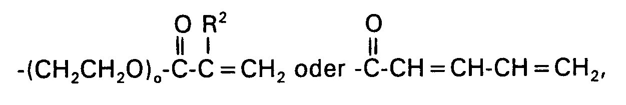 R² für -H, -CH₃, -CN, -Cl oder F und o für eine Zahl von 0 bis 10 steht, und die Seitenketten des Polymeren gleichsinnig, parallel nebeneinander und im wesentlichen senkrecht zur Schichtebene orientiert sind.

2. Film nach Anspruch 1, dadurch gekennzeichnet, daß das organische Polymer mit langkettigen Fluoralkylgruppen aus mindestens einem Monomer der allgemeinen Formel I und mindestens einem Monomer der allgemeinen Formel II 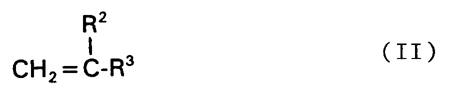 worin R² die in Anspruch 1 angegebene Bedeutung hat,
R³ für 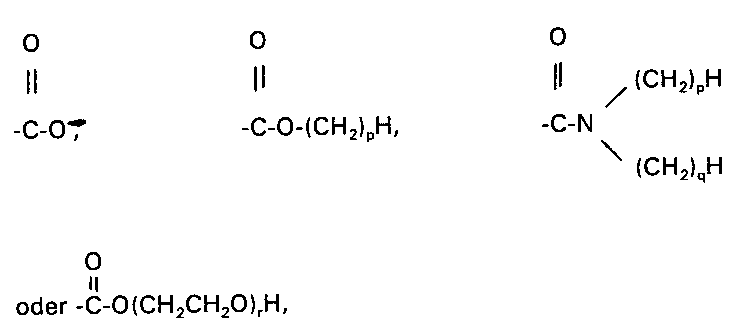 p und q für Zahlen von 0 bis 24 und
r für eine Zahl von 1 bis 10 steht,
durch radikalische Polymerisation erhältlich ist.

3. Film nach Anspruch 2, dadurch gekennzeichnet, daß das organische Polymere Monomereinheiten von Acrylsäure oder Acrylsäurederivaten enthält.

4. Film nach Anspruch 1, dadurch gekennzeichnet, daß die Schicht das organische Polymere mit langkettigen Fluoralkylseitengruppen im Gemisch mit einer amphiphilen Substanz enthält, die kein organisches Polymer mit langkettigen Fluoralkylseitenketten ist und ausgewählt ist aus der Gruppe bestehend aus langkettigen Fettsäure, langkettigem Alkohol, langkettigem Amid und Verbindungen der Formel III 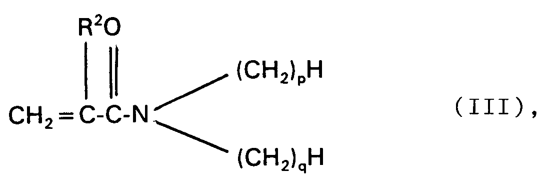 wobei R² die in Anspruch 1 angegebene Bedeutung hat und p und q Zahlen von 0 bis 24 sind.

5. Film nach Anspruch 1, dadurch gekennzeichnet, daß er aus mindestens zwei monomolekularen Schichten unterschiedlicher Zusammensetzung besteht, wobei jeweils eine Schicht, welche ein organisches Polymeres mit langkettigen Fluoralkylseitengruppen enthält oder aus dieser besteht, abwechselt mit einer Schicht, welche eine andere amphiphile Verbindung enthält oder aus dieser besteht.

6. Verfahren zur Herstellung von Filmen gemäß Anspruch 1, dadurch gekennzeichnet, daß man aus einem amphiphilen organischen Polymer mit langkettigen Fluoralkylseitengruppen einen Film auf einer Wasseroberfläche erzeugt und den Film auf einen Träger überträgt.

7. Verfahren nach Anspruch 6, dadurch gekennzeichnet, daß man die Ordnung der Moleküle des auf den Träger übertragenen Films durch Erhitzen auf eine Temperatur in der Nähe eines Phasenübergangs und anschließendes Wiederabkühlen verbessert.

8. Verfahren nach Anspruch 7, dadurch gekennzeichnet, daß man den Film auf eine Temperatur knapp unterhalb eines durch Röntgenbeugung beobachtbaren Phasenübergangs in ein flüssig-kristallines System oder von einem flüssig-kristallinen System in ein isotropes System aufheizt, solange bei dieser Temperatur hält bis eine durch Verschärfung der Röntgenbeugungslinien sichtbare Erhöhung der Ordnung eingetreten ist und man anschließend wieder abkühlt.

9. Verfahren nach Anspruch 8, dadurch gekennzeichnet, daß man den Film auf eine Temperatur aufheizt bei der die Röntgenbeugungslinien verschwinden und man anschließend wieder abkühlt.

10. Verwendung des Films nach Anspruch 1 zur Vergütung von Oberflächen und zur Verminderung der Reibung zwischen Oberflächen.

11. Verwendung des Films nach Anspruch 1 für optische Zwecke.

## Claims

1. A film consisting of at least one ordered monomolecular layer of an amphiphilic compound, layer which contains, or consists of, an organic polymer having long-chain fluoroalkyl groups, wherein the polymer is obtainable by free-radical polymerization of at least one monomer of the formula I
CF₃(CF₂)ₙ(CH₂)ₘ-X-R¹ (I)
where n is 5 to 11 and m is 0 to 24,
X is 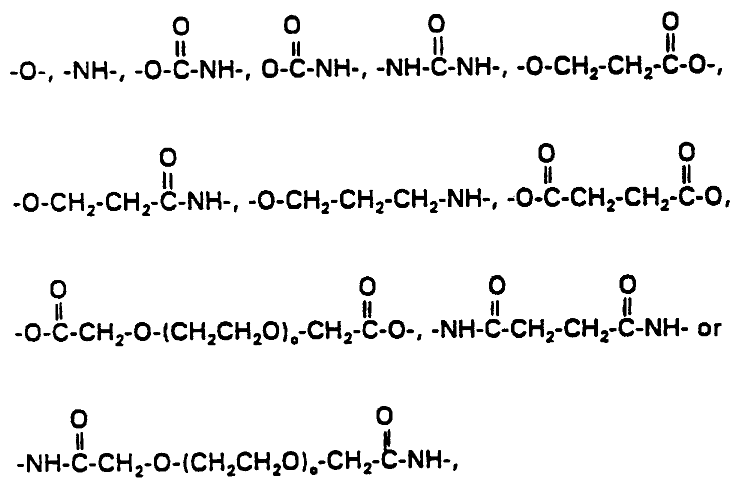 R¹ is 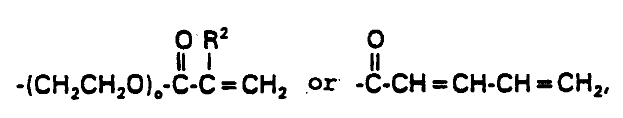 R² is -H, -CH₃, -CN, -Cl or F and o is a number from 0 to 10, and the side chains of the polymer are oriented in the same sense, parallel to one another and essentially at right angles to the plane of the layer.

2. A film as claimed in claim 1, wherein the organic polymer having long-chain fluoroalkyl groups is obtainable by free-radical polymerization of at least one monomer of the formula I and at least one monomer of the formula II 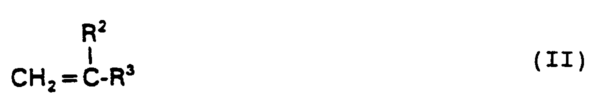 where R² is as defined in claim 1,
R³ is 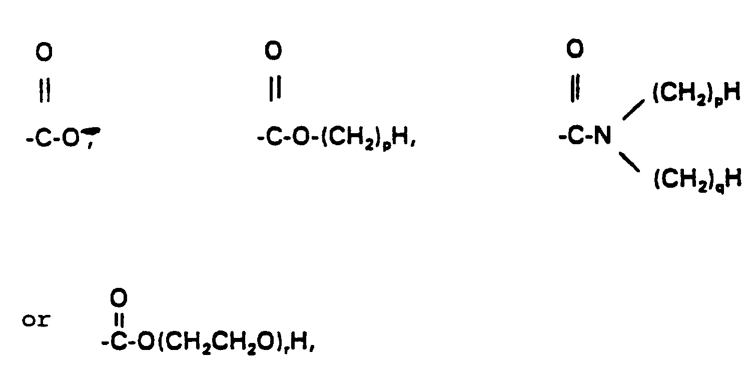 p and q are numbers from 0 to 24, and
r is a number from 1 to 10.

3. A film as claimed in claim 2, wherein the organic polymer contains monomer units of acrylic acid or acrylic acid derivatives.

4. A film as claimed in claim 1, wherein the layer contains the organic polymer having long-chain fluoroalkyl side groups as a mixture with an amphiphilic substance which does not contain an organic polymer having long-chain fluoroalkyl side chains and is selected from the group consisting of long-chain fatty acid, long-chain alcohol, long-chain amide and compounds of the formula III 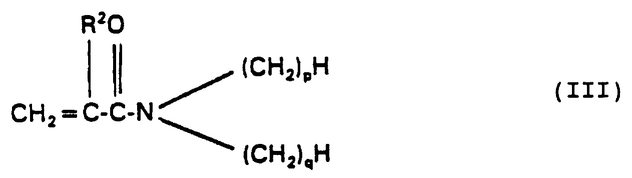 where R² is as defined in claim 1 and p and q are numbers from 0 to 24.

5. A film as claimed in claim 1, which consists of two or more monomolecular layers of different composition, in which a layer which contains, or consists of, an organic polymer having long-chain fluoroalkyl side groups alternates in each case with a layer which contains or consists of another amphiphilic compound.

6. A process for the production of a film as claimed in claim 1, wherein a film is produced on a water surface from an amphiphilic organic polymer having long-chain fluoroalkyl side groups, and the film is transferred to a substrate.

7. A process as claimed in claim 6, wherein the order of the molecules of the film transferred to the substrate is improved by heating to a temperature close to a phase transition and then cooling again.

8. A process as claimed in claim 7, wherein the film is heated to a temperature just below a phase transition to a liquid crystalline system or from a liquid crystalline system to an isotropic system, which phase transition is observable by X-ray diffraction, is kept at this temperature until an increase in the order visible from a sharpening of the X-ray diffraction lines occurs and is then cooled again.

9. A process as claimed in claim 8, wherein the film is heated to a temperature at which the X-ray diffraction lines vanish and is then cooled again.

10. Use of the film as claimed in claim 1 for the treatment of surfaces and for reducing the friction between surfaces.

11. Use of a film as claimed in claim 1 for optical purposes.

## Revendications

1. Pellicule formée d'une ou de plusieurs couches monomoléculaires ordonnées d'un composé amphiphile, couches qui contiennent un polymère organique à groupes latéraux fluoralkyliques à longues chaînes ou qui sont constituées de ce polymère, pellicule caractérisée en ce que le polymère a été obtenu par une polymérisation radicalaire d'un ou de plusieurs monomères de formule I
CF₃(CF₂)ₙ(CH₂)ₘ-X-R¹ (I)
(dans laquelle
n désigne un nombre de 5 à 11 et
m un nombre de 0 à 24,
X désigne 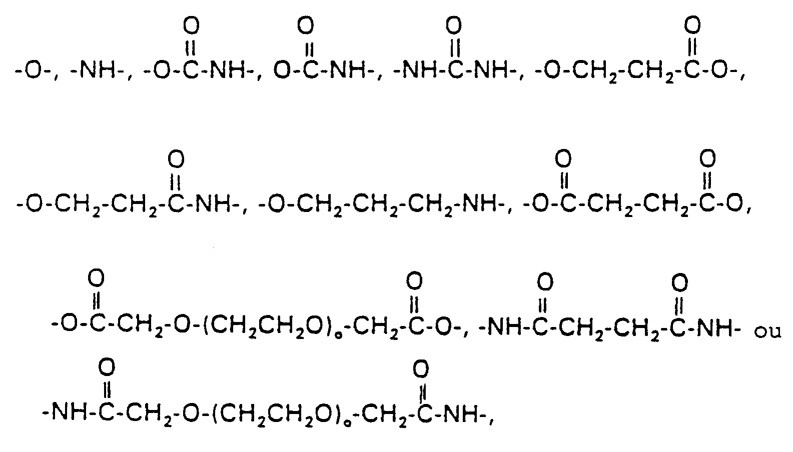 et R¹ 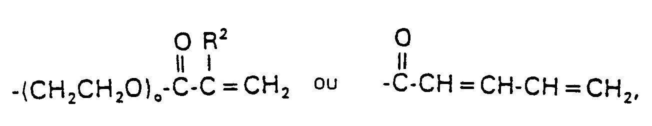 R² désignant -H, -CH₃, -CN, -Cl ou -F et o un nombre de 0 à 10), et les chaînes latérales du polymère sont orientées dans le même sens, parallèlement les unes aux autres et verticalement par rapport au plan de la couche.

2. Pellicule selon le revendication 1, caractérisée en ce que le polymère à groupes fluoralkyliques a été obtenu par polymérisation radicalaire d'au moins un monomère de formule I et d'au moins un monomère de formule II 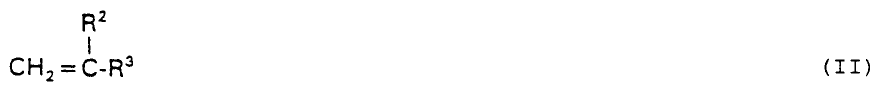 dans laquelle R² a la même signification qu'à la revendication 1, et
R³ désigne 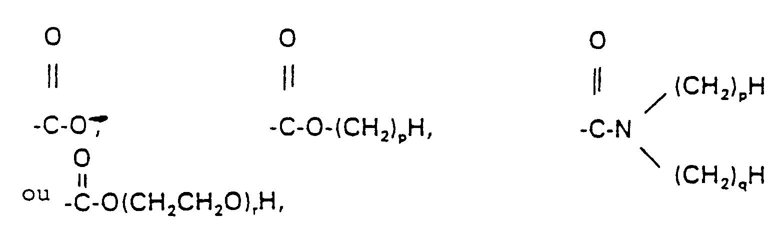 p et q étant des nombres de 0 à 24 et
r un nombre de 1 à 10.

3. Pellicule selon la revendication 2, caractérisée en ce que le polymère comprend des motifs monomères de l'acide acrylique ou de dérivés de cet acide.

4. Pellicule selon la revendication 1, caractérisée en ce que la couche comprend le polymère à groupes latéraux fluoralkyliques en mélange avec une substance amphiphile qui n'est pas un polymère organique à groupes latéraux fluoralkyliques à longue chaîne et qui est prise parmi des acides gras à longue chaîne, des alcools à longue chaîne, des amides à longue chaîne et des composés de formule III. 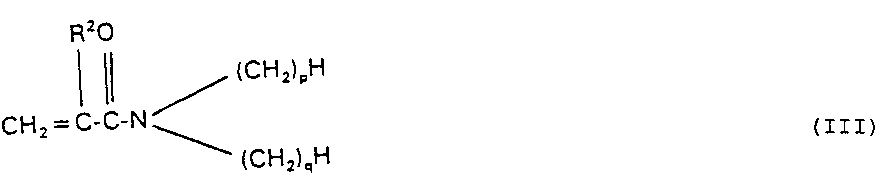 R² ayant la signification indiquée à la revendication 1 et p et q étant des nombres de 0 à 24

5. Pellicule selon la revendication 1, caractérisée en ce qu'elle est formée d'au moins deux couches monomoléculaires de composition différente dont l'une, qui contient un polymère organique à groupes latéraux fluoralkyliques à longue chaîne ou qui en est formée, alterne avec l'autre couche qui contient un autre composé amphiphile ou qui en est formée.

6. Procédé de préparation de pellicules selon le revendication 1, procédé caractérisé en ce que l'on forme sur une surface d'eau une pellicule avec un polymère organique amphiphile a groupes latéraux fluoralkylique a longue chaîne et on applique la pellicule sur un support.

7. procédé selon la revendication 6, caractérisé en ce que l'on améliore l'ordre des molécules de la pellicule appliquée sur le support par un chauffage à une température voisine d'une transition de phase, chauffage qui est suivi d'un refroidissement.

8. Procédé selon la revendication 7, caractérisé en ce que l'on chauffe la pellicule à une température juste au-dessous d'une transition de phase observable par difraction de rayons X dans un système à cristaux liquides ou d'un système à cristaux liquides dans un système isotrope, température que l'on maintient jusqu'à ce qu'il se produise une augmentation de l'ordre des molécules qui est rendue visible par l'intensification des raies de difraction, puis on refroidit la pellicule.

9. Procédé selon la revendication 8, caractérisé en ce que l'on chauffe la pellicule à une température à laquelle disparaîssent les raies de difraction de rayons X puis on la refroidit.

10. L'emploi d'une pellicule selon la revendication 1 pour améliorer la qualité de surfaces et pour réduire les frottements entre surfaces.

11. Emploi d'une pellicule selon la revendication 1 a des fins optiques.
